(19) **Europäisches Patentamt European Patent Office Office européen des brevets**

(11) **EP 1 510 790 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(51) Int Cl.:
***G01D 5/36*** *(2006.01)*

(21) Anmeldenummer: **04011338.3**

(22) Anmeldetag: **13.05.2004**

(54) **Verfahren und Vorrichtung zur Regelung einer Lichtquelle eines Positionsmessgerätes**

Method and device for regulating the light source in a positioning measuring device

Méthode et dispositif pour régler la source de lumière d'un appareil de mesure de position

(84) Benannte Vertragsstaaten:
**AT BE BG CH CY CZ DE DK EE ES FI FR GB GR HU IE IT LI LU MC NL PL PT RO SE SI SK TR**

(30) Priorität: **27.08.2003 DE 10339366**

(43) Veröffentlichungstag der Anmeldung:
**02.03.2005 Patentblatt 2005/09**

(73) Patentinhaber: **Dr. Johannes Heidenhain GmbH 83292 Traunreut (DE)**

(72) Erfinder:
• **Mayer, Elmar**
  **83365 Nussdorf (DE)**
• **Oberhauser, Johann**
  **83377 Vachendorf (DE)**

(56) Entgegenhaltungen:
**EP-A- 0 591 832          DE-A- 2 730 056**

EP 1 510 790 B1

**Beschreibung**

Die Erfindung betrifft eine Vorrichtung zur Regelung einer Lichtquelle in einem Positionsmessgerät gemäß dem Oberbegriff des Anspruches 1 und ein entsprechendes Verfahren gemäß dem Anspruch 6.

In Positionsmessgeräten werden häufig Lichtquellen eingesetzt, deren Licht positionsabhängig durch eine entsprechende Maßverkörperung zum Beispiel in Form eines Maßstabes oder einer Teilscheibe moduliert wird. Das modulierte Licht wird üblicherweise durch Fotodetektoren in elektrische Fotoströme umgewandelt, so dass die relative Position zwischen der Lichtquelle und der Maßverkörperung aus diesen positionsabhängigen Fotoströmen ermittelt werden kann.

Bei derartigen Positionsmessgeräten kommt es vor, dass sich die Lichtintensität mit der Zeit verändert, zum Beispiel dass sie durch Alterung der Lichtquelle im Laufe der Betriebszeit zurückgeht. Wegen den Änderungen der von den Fotodetektoren empfangenen Lichtintensität wird häufig zur Verbesserung der Messqualität eine Regelung der Lichtquelle vorgenommen.

In der GB 2054135 A wird ein Verfahren und eine entsprechende Vorrichtung zur Regelung einer derartigen Lichtquelle beschrieben. Zu diesem Zweck wird dort in einem Regelkreis als Ist-Größe der Lichtintensität die Summe der positionsabhängigen Fotoströme gebildet. Diese Ist-Größe wird sodann mit einer unveränderlichen, fest vorgegeben Soll- Größe verglichen, um dadurch die Regeldifferenz zur Regelung der Lichtquelle zu ermitteln. Eine derartige Regelungsvorrichtung hat den Nachteil, dass bei Verschmutzungen, insbesondere bei großflächigen Verschmutzungen der Maßverkörperung, keine oder nur eine ungenaue oder instabile Positionsmessung möglich ist.

Der Erfindung liegt daher die Aufgabe zugrunde, eine Vorrichtung und ein Verfahren zu schaffen, durch das eine sichere, robuste, insbesondere gegenüber Verschmutzungen unempfindliche Positionsmessung mit hoher Genauigkeit möglich ist.

Diese Aufgabe wird erfindungsgemäß durch die Merkmale des Anspruches 1 bzw. des Anspruches 6 gelöst.

Erfindungsgemäß wird die zur Regelung einer Lichtquelle maßgebliche Soll-Größe, basierend auf positionsabhängigen Fotoströmen erzeugt, wobei die positionsabhängigen Fotoströme durch Umwandlung von moduliertem Licht der Lichtquelle mittels Fotodetektoren entstehen. Die für die Bestimmung der Regeldifferenz zur Regelung der Lichtquelle weiterhin erforderliche Ist-Größe wird basierend auf positionsabhängigen oder auch auf positionsunabhängigen Fotoströmen gebildet.

Mit Vorteil sind die Fotodetektoren und ein Mittel zur Erzeugung der Soll-Größe auf ein und demselben ASIC untergebracht.

In einer bevorzugten Ausgestaltung der Erfindung werden zur Ermittlung der Soll-Größe zunächst mit einem Analog-Digitalwandler elektrische Signale digitalisiert, welche auf positionsabhängigen Fotoströmen basieren. Danach werden diese digitalen Werte weiterverarbeitet.

Vorteilhafte Ausbildungen der Erfindung entnimmt man den abhängigen Ansprüchen.

Weitere Einzelheiten und Vorteile des erfindungsgemäßen Verfahrens und der entsprechenden Vorrichtung zur Regelung einer Lichtquelle eines Positionsmessgerätes ergeben sich aus der nachfolgenden Beschreibung zweier Ausführungsbeispiele anhand der beiliegenden Figuren.

Es zeigen die

Figur 1    eine schematische Darstellung eines ersten Ausführungsbeispieles der Erfindung,

Figur 2    eine schematische Darstellung eines zweiten Ausführungsbeispieles der Erfindung.

In der Beschreibung der Ausführungsbeispiele sind der Übersichtlichkeit halber gleichwirkende Bauteile mit gleichen Bezugszeichen versehen.

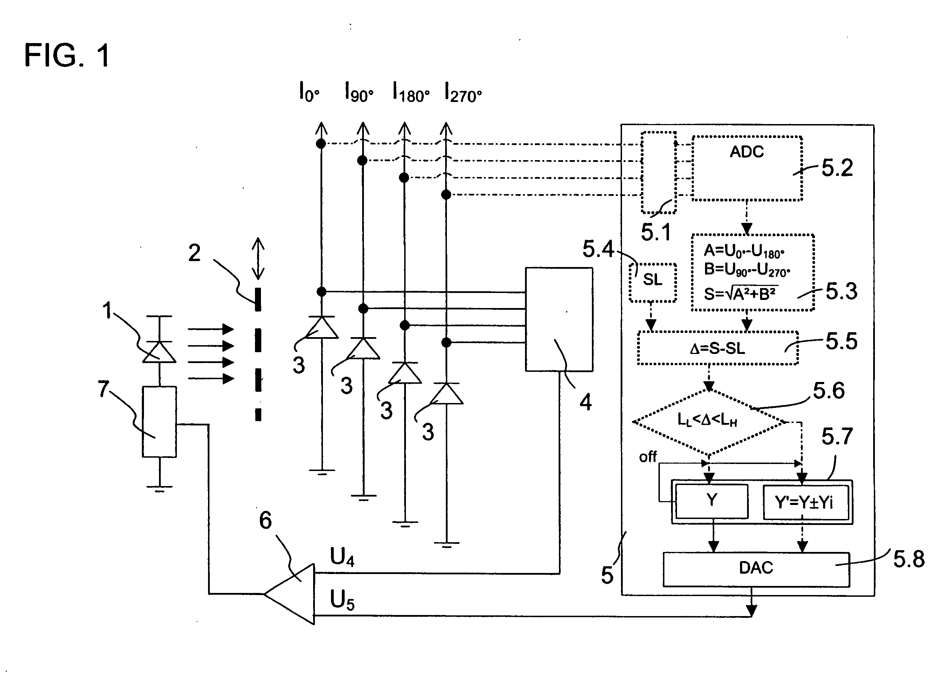

In der Figur 1 ist schematisch der Aufbau eines Positionsmessgerätes mit der erfindungsgemäßen Regelung gezeigt. Dabei ist eine Lichtquelle dargestellt, die im vorgestellten Ausführungsbeispiel als eine LED 1 ausgebildet ist. Der LED 1 gegenüber befindet sich eine Maßverkörperung in Form eines transparenten Maßstabes 2, auf dem lichtundurchlässige Teilungsstriche aufgebracht sind. Darüber hinaus weist das Positionsmessgerät vier Fotodetektoren 3 auf, wobei sich der Maßstab 2 zwischen den Fotodetektoren 3 und der LED 1 befindet. Die Fotodetektoren 3 sind im gezeigten Beispiel in einem Halbleiterelement, insbesondere einem ASIC, integriert.

Im vorgestellten Ausführungsbeispiel wird eine vergleichsweise einfache Ausgestaltung der optischen Elemente beschrieben. Es ist selbstverständlich, dass die Erfindung auch in Positionsmessgeräten mit wesentlich komplexeren optischen Anordnungen angewendet werden kann.

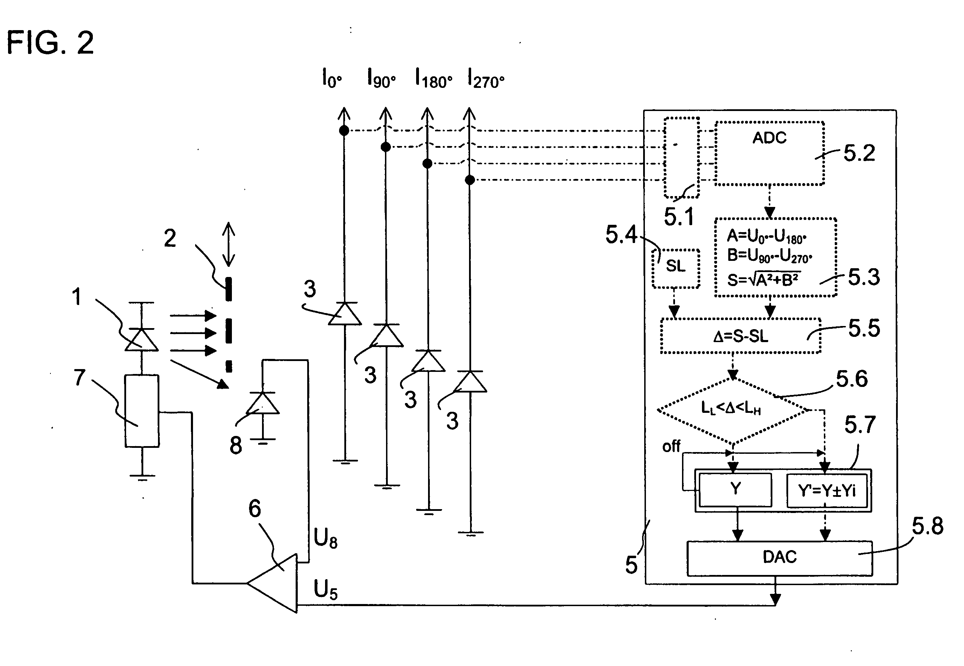

Der Maßstab 2 ist in Richtung des Doppelpfeils in den Figuren 1 und 2 relativ zur LED 1 verschiebbar, wobei durch das Positionsmessgerät die Relativposition zwischen Maßstab 2 und LED 1 gemessen wird. Zu diesem Zweck wird das von der LED 1 emittierte Licht durch den Maßstab 2 positionsabhängig moduliert und in den Fotodetektoren 3 in positionsabhängige Fotoströme $I_{0°}$, $I_{90°}$, $I_{180°}$, $I_{270°}$ umgewandelt. Die auf diese Weise erzeugten positionsabhängigen Fotoströme $I_{0°}$, $I_{90°}$, $I_{180°}$, $I_{270°}$ weisen idealerweise einen sinusförmigen Verlauf auf und haben einen Phasenversatz von jeweils 90°. Die positionsabhängigen Fotoströme $I_{0°}$, $I_{90°}$, $I_{180°}$, $I_{270°}$ werden danach in einer, in den Figuren nicht dargestellten, Auswerteelektronik weiterverarbeitet, so dass aus ihnen letztlich die zu bestimmenden Positionsdaten erzeugt werden. Die Erfindung ist nicht auf Anordnungen eingeschränkt bei denen genau vier Fotodetektoren 3 eingesetzt werden, bzw. bei denen vier Fotoströme $I_{0°}$, $I_{90°}$,

$I_{190°}$, $I_{270°}$ ausgewertet werden. Es können hier beispielsweise auch zwei oder drei Fotodetektoren und entsprechend dann zwei oder drei positionsabhängige Fotoströme zur Auswertung herangezogen werden.

Der mittlere Fotostrom, der aus der Summe aller positionsabhängigen Fotoströme $I_{0°}$, $I_{90°}$, $I_{180°}$, $I_{270°}$ gebildet wird, ist im Idealfall konstant. Wenn aber beispielsweise die Intensität der LED 1 nachlässt, so wird sich auch der mittlere Fotostrom reduzieren. Insbesondere, wenn der Maßstab 2 verschmutzt ist, zum Beispiel durch einen Flüssigkeitsfilm, kann es jedoch sein, dass der Mittelwert der positionsabhängigen Fotoströme $I_{0°}$, $I_{90°}$, $I_{180°}$, $I_{270°}$ gegenüber dem Idealfall nahezu unverändert bleibt, aber der Modulationsgrad der positionsabhängigen Fotoströme $I_{0°}$, $I_{90°}$, $I_{180°}$, $I_{270°}$ stark reduziert ist. Das heißt, dass Bereiche, wo im Idealfall kaum Licht einfällt, die also dunkel sein sollten, zum Beispiel wegen Streuungseffekten nunmehr heller sind. Demgegenüber werden an sich helle Bereiche durch die Verschmutzung dunkler. Die Abweichungen in den Extrema der positionsabhängigen Fotoströme $I_{0°}$, $I_{90°}$, $I_{180°}$, $I_{270°}$ vom mittleren Fotostrom wird also geringer bzw. der Modulationsgrad wird reduziert. Ein reduzierter Modulationsgrad führt zu schlechteren bzw. geringeren Messsignalamplituden. Gerade im Zusammenhang mit Verschmutzungen, die zu einer Reduktion des Modulationsgrades führen, weisen herkömmliche Positionsmessgeräte erhebliche Nachteile auf.

Im gezeigten ersten Ausführungsbeispiel wird gemäß der Figur 1 mit einem Summengenerator 4 durch ein analoges Verfahren auf Basis der positionsabhängigen Fotoströme $I_{0°}$, $I_{90°}$, $I_{180°}$, $I_{270°}$ eine Summenspannung gebildet, die gleichzeitig als Ist-Größe $U_4$ im Regelkreis zur Regelung der Intensität der LED 1 dient. Diese Ist-Größe $U_4$ wird dann einem Vergleicher, der in Form eines Differenzverstärkers 6 ausgestaltet ist zugeführt, und dort als Istwert für die Regelung der LED 1 verwendet.

Die für die Regelung der Intensität der LED 1 erforderliche Soll-Größe $U_5$ wird mit Hilfe eines Mittels zur Erzeugung einer Soll-Größe $U_5$, im gezeigten Beispiel mit Hilfe einer Schaltung 5, bestimmt. Physikalisch kann die Soll-Größe $U_5$ als eine elektrische Spannung gesehen werden. Im gezeigten Beispiel befindet sich im Übrigen die Schaltung 5 auf dem selben ASIC, auf dem auch die Fotodetektoren 3 angeordnet sind.

Die Funktionsweise der Schaltung 5 und deren Elemente werden im Folgenden erläutert. Zunächst werden nach dem Einschalten des Positionsmessgerätes die positionsabhängigen Fotoströme $I_{0°}$, $I_{90°}$, $I_{180°}$, $I_{270°}$ in einem Strom-Spannungswandler 5.1 in Fotospannungen $U_{0°}$, $U_{90°}$, $U_{180°}$, $U_{270°}$ umgewandelt. Diese elektrischen Signale in Form der Fotospannungen $U_{0°}$, $U_{90°}$, $U_{180°}$, $U_{270°}$, welche folglich auf den positionsabhängigen Fotoströmen $I_{0°}$, $I_{90°}$, $I_{180°}$, $I_{270°}$. basieren, werden dann in einem Analog-Digital-Wandler 5.2 digitalisiert, also in digitale Werte umgeformt. Aus diesen digitalen Werten, die den Fotospannungen $U_{0°}$, $U_{90°}$, $U_{180°}$, $U_{270°}$ entsprechen, werden eine erste Differenz $A = U_{0°} - U_{180°}$ und eine zweite Differenz $B = U_{90°} - U_{270°}$ gebildet. Diese Differenzen A und B werden in einem Berechnungsmodul 5.3 quadriert und die entsprechende Summe der Quadrate bestimmt. Danach wird aus der Summe der Quadrate die Quadratwurzel ermittelt, so dass als Ergebnis dieser Transformation eine im Betrieb des Positionsmessgerätes tatsächlich vorliegenden Zeigerlänge

$$S \; (S = \sqrt{A^2 + B^2}) \text{ bestimmt wird.}$$

Im nächsten Schritt wird aus einem Speicherelement, hier ein EPROM 5.4, ein bereits abgespeicherter Wert einer Soll-Zeigerlänge SL ausgelesen. Im gezeigten Ausführungsbeispiel wird die Soll-Zeigerlänge SL bereits bei der Konfiguration des Positionsmessgerätes, also vor dem eigentlichen Messeinsatz, dauerhaft abgespeichert. Der Wert der Soll-Zeigerlänge SL wird dann über die gesamte Lebensdauer des Positionsmessgerätes nicht mehr verändert.

Der vorgegebene Wert der Soll-Zeigerlänge SL wird daraufhin vom der tatsächlich vorliegenden Zeigerlänge S mit dem in einem Differenzbildner 5.5 subtrahiert, so dass die Differenz $\Delta = S - SL$ berechnet wird.

In einem Vergleicher 5.6 wird danach überprüft, ob die Differenz $\Delta$ innerhalb vorgegebener Grenzen liegt oder nicht. Es wird also abgefragt, ob $\Delta$ größer ist als eine untere vorbestimmte Grenze $L_L$ und ob $\Delta$ kleiner ist als eine obere vorbestimmte Grenze $L_H$. Im Allgemeinen wird hier im ersten Iterationsschritt eine unzulässig große Abweichung vorliegen, so dass zu einem Sollwert Y (im ersten Iterationsschritt ist hier ein Default-Wert vorgegeben) ein Wert Yi addiert oder subtrahiert wird, je nachdem ob der Wert $\Delta$ über oder unter den Grenzen $L_H$ bzw. $L_L$ liegt. Der neue Sollwert $Y' = Y \pm Yi$ wird dann im Sollwertspeicher 5.7 abgelegt. Dieser neue Sollwert $Y'$ wird dann in einem Digital-Analogwandler 5.8 in eine analoge Soll-Größe $U_5$ (elektrische Spannung) umgewandelt, die wie oben beschrieben, auf den positionsabhängigen Fotoströmen $I_{0°}$, $I_{90°}$, $I_{180°}$, $I_{270°}$ basiert.

Alternativ zu diesem Verfahren zur Bestimmung der tatsächlich vorliegenden Zeigerlänge S kann beispielsweise auch das sogenannte Summenstrom-Verfahren verwendet werden, bei dem die Zeigerlänge S auf Basis der Summe der positionsabhängigen Fotoströme $I_{0°}$, $I_{90°}$, $I_{180°}$, $I_{270°}$ ermittelt wird.

Die analoge Soll-Größe $U_5$ wird danach dem Differenzverstärker 6 zugeführt, wo sie mit der Ist-Größe $U_4$ verglichen wird, so dass eine Regeldifferenz zur Regelung der Intensität der LED 1 erzeugt wird. Die Regeldifferenz, die physikalisch betrachtet ebenfalls eine Spannung darstellt, liegt an einem Steilglied, im gezeigten Ausführungsbeispiel einem Transistor 7, insbesondere an der Basis des Transistors 7 an. Entsprechend dieser Regeldifferenz stellt sich die Höhe bzw. Amplitude des Stroms ein, der in die LED 1 eingespeist wird. Die Intensität des von der LED 1 emittierten Lichtes ist bekanntermaßen eine Funktion der Höhe des in die LED 1 eingespeisten Stromes.

Entsprechend der so vorgenommenen Änderung der Lichtintensität ändern sich nun auch die Amplituden der positionsabhängigen Fotoströme $I_{0°}$, $I_{90°}$, $I_{180°}$, $I_{270°}$. Dies führt dann wiederum zu einer Änderung des Wertes der tatsächlich vorliegenden Zeigerlänge S.

Sobald vom Vergleicher 5.6 nach dem Durchlauf von einem oder mehrerer Iterationsschritte festgestellt wird, dass im Differenzbilder 5. 5 die Differenz Δ zwischen der tatsächlich vorliegenden Zeigerlänge S und dem vorgegebenen Wert der Soll-Zeigerlänge SL innerhalb der vorgegebenen Grenzen liegt, wird ein entsprechender Sollwert Y im Sollwertspeicher 5.7 über eine bestimmte Zeit gespeichert. Im gezeigten Beispiel wird der Sollwert Y bis zum nächsten Einschalten des Positionsmessgerätes unverändert bleiben. Das heißt, dass ab diesem Zeitpunkt bis zum nächsten Einschaltvorgang des Positionsmessgerätes die gestrichelt dargestellten Schaltungselemente nicht mehr aktiv sind. Im vorgestellten Ausführungsbeispiel wird also jeweils nach dem Einschalten des Positionsmessgerätes die Soll-Größe $U_5$ überprüft und ggf. nach mehreren Iterationsschritten ein entsprechender Wert Y abgespeichert, so dass der Soll-Größe $U_5$ bis zum nächsten Einschaltvorgang im Regelkreis zur Regelung der Intensität der LED 1 unverändert bleibt.

In einer Abwandlung der Erfindung kann der Sollwert Y aber auch permanent während des Betriebs des Positionsmessgerätes überprüft werden. Dabei kann eine stützpunktabhängige Ermittlung des Sollwerts Y in vorgegebenen Zeitintervallen, z. B. alle 68 μs vorgenommen werden, oder aber auch positionsabhängig erfolgen, z. B. kann der Sollwert Y alle 100 Signalperioden bestimmt werden.

Die Regelung kann aber auch so konfiguriert sein, dass, wenn der Vergleicher 5.6 während des Betriebs eine zu große Differenz Δ zwischen der tatsächlich vorliegenden Zeigerlänge S und der vorgegebenen Wert der Soll-Zeigerlänge SL feststellt, während des Betriebes lediglich ein Alarm ausgelöst wird. Im Falle des Alarms ist dann das Positionsmessgerät neu zu starten, so dass somit die neuerliche Festsetzung bzw. Speicherung eines veränderten Sollwertes Y im Sollwertspeicher 5.7 mit der Startprozedur vorgenommen wird.

In der Figur 2 ist eine alternative Ausgestaltung der Erfindung durch ein zweites Ausführungsbeispiel gezeigt. Dabei sind die Fotodetektoren 3;8 so angeordnet, dass durch eine Teilanzahl der Fotodetektoren vom Maßstab 2 moduliertes Licht in positionsabhängige Fotoströme $I_{0°}$, $I_{90°}$, $I_{180°}$, $I_{270°}$ umgewandelt wird. Die Ermittlung der Soll-Größe $U_5$ basiert also nur auf Fotoströmen $I_{0°}$, $I_{90°}$, $I_{180}$, $I_{270°}$ einer Teilanzahl der Fotodetektoren, nämlich der Fotodetektoren 3. Im zweiten Ausführungsbeispiel wird ferner die Soll-Größe $U_5$ mit der gleichen Schaltung 5 wie im ersten Ausführungsbeispiel ermittelt.

Der wesentliche Unterschied zum ersten Ausführungsbeispiel besteht nun darin, dass im zweiten Ausführungsbeispiel das nicht-modulierte Licht der LED 1 durch einen Fotodetektor 8 in einen Fotostrom umgewandelt wird, wobei dieser Fotostrom die Basis für die Ist-Größe $U_8$ darstellt. Das heißt, dass für die Regelung der Intensität der LED 1 eine Ist-Größe $U_8$ verwendet wird, die letztlich von dem Fotodetektor 8 erzeugt wird, welcher von der LED 1 emittiertes Licht empfängt, das nicht durch den Maßstab 2 positionsabhängig moduliert wird.

Die Ist-Größe $U_8$ wird dann, wie auch im ersten Ausführungsbeispiel, dem Differenzverstärker 6 zugeführt, wo ein Vergleich zwischen der Ist-Größe $U_8$ und der Soll-Größe $U_5$ durchgeführt wird, so dass eine Regeldifferenz zur Regelung der Intensität der LED 1 ermittelt wird. Dabei wird auch hier die Regeldifferenz in Form einer Spannung an die Basis des Transistors 7 angelegt, so dass die LED 1 letztlich mit einem elektrischen Strom, dessen Höhe von der Regeldifferenz abhängt versorgt wird.

Im zweiten Ausführungsbeispiel muss zur Ermittlung der Ist-Größe $U_8$ keine Summenbildung von mehreren Fotoströmen vorgenommen werden, sondern es wird hier direkt der Gleichlichtanteil mit dem Fotodetektor 8 bestimmt.

In den gezeigten Ausführungsbeispielen wird die Soll-Größe $U_5$ jeweils durch ein digitales Verfahren bestimmt. Die Erfindung umfasst jedoch auch Anordnungen und Verfahren, bei denen die Soll-Größe $U_5$ durch eine analoge Schaltung ermittelt wird.

**Patentansprüche**

1.  Vorrichtung zur Regelung einer Lichtquelle (1) eines Positionsmessgeräts, umfassend

    - eine relativ zur Lichtquelle (1) verschiebbare Maßverkörperung (2),
    - mehrere Fotodetektoren (3; 8), durch welche das von der Lichtquelle (1) emittierte Licht in Fotoströme ($I_{0°}$, $I_{90°}$, $I_{180°}$, $I_{270°}$; $I_8$) umwandelbar ist, wobei der Fotostrom ($I_{0°}$, $I_{90°}$, $I_{180°}$, $I_{270°}$; $I_8$) mindestens eines der Fotodetektoren (3; 8) als Basis zur Bildung einer Ist-Größe ($U_4$; $U_8$) verwendbar ist, und
    die Fotodetektoren (3;8) so angeordnet sind, dass durch zumindest einer Teilanzahl der Fotodetektoren (3) von der Maßverkörperung (2) moduliertes Licht in positionsabhängige Fotoströme ($I_{0°}$, $I_{90°}$, $I_{180°}$, $I_{270°}$) umwandelbar ist,
    - ein Mittel (5) zur Erzeugung einer Soll-Größe ($U_5$), und
    - einen Vergleicher (6), durch welchen ein Vergleich zwischen der Ist-Größe ($U_4$; $U_8$) und der Soll-Größe ($U_5$) durchführbar ist, zur Erzeugung einer Regeldifferenz für die Regelung der Intensität der Lichtquelle (1),

**dadurch gekennzeichnet, dass** durch das Mittel (5) die Soll-Größe ($U_5$) basierend auf den positionsabhängigen Fotoströmen ($I_{0°}$, $I_{90°}$, $I_{180°}$, $I_{270°}$) erzeugbar ist.

2. Positionsmessgerät gemäß dem Anspruch 1, **dadurch gekennzeichnet, dass** das Mittel (5) zur Erzeugung der Soll-Größe ($U_5$) ein Berechnungsmodul (5.3) zur Bildung der Zeigerlänge (S) von Signalen, welche auf den positionsabhängigen Fotoströmen ($I_{0°}$, $I_{90°}$, $I_{180°}$, $I_{270°}$) basieren, aufweist.

3. Positionsmessgerät gemäß dem Anspruch 1 oder 2, **dadurch gekennzeichnet, dass** das Mittel (5) zur Erzeugung der Soll-Größe ($U_5$) einen Analog-Digitalwandler (5.2) zum Digitalisieren von Signalen, welche auf den positionsabhängigen Fotoströmen ($I_{0°}$, $I_{90°}$, $I_{180°}$, $I_{270°}$) basieren, aufweist.

4. Positionsmessgerät gemäß dem Anspruch 3, **dadurch gekennzeichnet, dass** das Mittel (5) zur Erzeugung der Soll-Größe ($U_5$) einen Digital-Analog-Wandler (5.8) zur Bereitstellung einer analogen Soll-Größe ($U_5$) aufweist.

5. Positionsmessgerät gemäß einem der vorhergehenden Ansprüche, **dadurch gekennzeichnet, dass** die Fotodetektoren (3;8) und das Mittel (5) zur Erzeugung der Soll-Größe ($U_5$) in einem Halbleiterelement integriert sind.

6. Verfahren zur Regelung einer Lichtquelle (1) eines Positionsmessgeräts mit folgenden Schritten:

   - Umwandeln von Licht, das von der Lichtquelle (1) emittiert wird, mittels Fotodetektoren (3; 8) in Fotoströme ($I_{0°}$, $I_{90°}$, $I_{180°}$, $I_{270°}$; $I_8$), wobei zumindest ein Teil des emittierten Lichtes durch eine relativ zur Lichtquelle (1) verschiebbare Maßverkörperung (2) moduliert wird, so dass durch das modulierte Licht mittels zumindest einer Teilanzahl der Fotodetektoren (3) positionsabhängige Fotoströme ($I_{0°}$, $I_{90°}$, $I_{180°}$, $I_{270°}$) erzeugt werden,
   - Erzeugung einer Ist-Größe ($U_4$; $U_8$), basierend auf zumindest einen der Fotoströme ($I_{0°}$, $I_{90°}$, $I_{180°}$, $I_{270°}$; $I_8$)
   - Erzeugung einer Soll-Größe ($U_5$), basierend auf den positionsabhängigen Fotoströmen ($I_{0°}$, $I_{90°}$, $I_{180°}$, $I_{270°}$) und
   - Vergleichen des Ist-Größe ($U_4$; $U_8$) mit der Soll-Größe ($U_5$) zur Erzeugung einer Regeldifferenz für die Regelung der Intensität der Lichtquelle (1).

7. Verfahren gemäß dem Anspruch 6, wobei die Ist-Größe ($U_4$; $U_8$) durch ein analoges Verfahren erzeugt wird.

8. Verfahren gemäß dem Anspruch 6 oder 7, wobei die Ist-Größe ($U_4$) auf Basis der Summe der Fotoströme ($I_{0°}$, $I_{90°}$, $I_{180°}$, $I_{270°}$; $I_8$) erzeugt wird.

9. Verfahren gemäß einem der Ansprüche 6 bis 8, wobei zur Erzeugung der Soll-Größe ($U_5$) elektrische Signale, welche auf den positionsabhängigen Fotoströmen ($I_{0°}$, $I_{90°}$, $I_{180°}$, $I_{270°}$) basieren, digitalisiert werden.

10. Verfahren gemäß einem der Ansprüche 6 bis 9, wobei zur Erzeugung der Soll-Größe ($U_5$) die Zeigerlänge (S) von elektrischen Signalen, welche auf den positionsabhängigen Fotoströmen ($I_{0°}$, $I_{90°}$, $I_{180°}$, $I_{270°}$) basieren, gebildet wird.

11. Verfahren gemäß dem Anspruch 10, wobei die Zeigerlänge (S) mit einem vorgegebenen Wert einen Soll-Zeigerlänge (SL) verglichen wird, und die Soll-Größe ($U_5$) solange verändert wird, bis die Differenz ($\Delta$) zwischen der Zeigerlänge (S) und der Soll-Zeigerlänge (SL) innerhalb vorgegebener Grenzen liegt.

12. Verfahren gemäß einem der Ansprüche 9 bis 11, wobei aus nach der Digitalisierung und nach der Weiterverarbeitung der digitalisierten Werte eine Digital-Analog-Wandlung vorgenommen wird, zur Bereitstellung der Soll-Größe ($U_5$).

**Claims**

1. Device for controlling a light source (1) of a position measuring device, comprising

   - a material measure (2) which is displaceable relative to the light source (1),
   - a plurality of photodetectors (3; 8), by means of which the light emitted from the light source (1) can be converted into photocurrents ($I_{0°}$, $I_{90°}$, $I_{180°}$, $I_{270°}$; $I_8$), the photocurrent ($I_{0°}$, $I_{90°}$, $I_{180°}$, $I_{270°}$; $I_8$) at least of one of the photodetectors (3; 8) being able to be used as the basis for forming an actual variable ($U_4$; $U_8$), and
   the photodetectors (3; 8) being disposed such that light modulated by the material measure (2) by at least a partial number of the photodetectors (3) can be converted into position-dependent photocurrents ($I_{0°}$, $I_{90°}$, $I_{180°}$, $I_{270°}$),
   - a means (5) for producing a reference variable ($U_5$), and
   - a comparator (6), by means of which a comparison between the actual variable ($U_4$; $U_8$) and the reference variable ($U_5$) can be implemented

in order to produce a control difference for controlling the intensity of the light source (1),

**characterised in that** the reference variable ($U_5$) can be produced by the means (5), based on the position-dependent photocurrents ($I_{0°}$, $I_{90°}$, $I_{180°}$, $I_{270°}$).

2. Position measuring device according to claim 1, **characterised in that** the means (5) for producing the reference variable ($U_5$) has a calculation module (5.3) for forming the vector length (S) of signals which are based on the position-dependent photocurrents ($I_{0°}$, $I_{90°}$, $I_{180°}$, $I_{270°}$).

3. Position measuring device according to claim 1 or 2, **characterised in that** the means (5) for producing the reference variable ($U_5$) has an analogue-digital converter (5.2) for digitalising signals which are based on the position-dependent photocurrents ($I_{0°}$, $I_{90°}$, $I_{180°}$, $I_{270°}$).

4. Position measuring device according to claim 3, **characterised in that** the means (5) for producing the reference variable ($U_5$) has a digital-analogue converter (5.8) for providing an analogue reference variable ($U_5$).

5. Position measuring device according to one of the preceding claims, **characterised in that** the photodetectors (3; 8) and the means (5) for producing the reference variable ($U_5$) are integrated in a semiconductor element.

6. Method for controlling a light source (1) of a position measuring device having the following steps:

   - conversion of light, which is determined from the light source (1), by means of photodetectors (3; 8) into photocurrents ($I_{0°}$, $I_{90°}$, $I_{180°}$, $I_{270°}$, $I_8$), at least a part of the emitted light being modulated by a material measure (2) which can be displaced relative to the light source (1) so that position-dependent photocurrents ($I_{0°}$, $I_{90°}$, $I_{180°}$, $I_{270°}$) are produced by the modulated light by means of at least a partial number of the photodetectors (3),
   - production of an actual variable ($U_4$; $U_8$), based on at least one of the photocurrents ($I_{0°}$, $I_{90°}$, $I_{180°}$, $I_{270°}$, $I_8$),
   - production of a reference variable ($U_5$), based on the position-dependent photocurrents ($I_{0°}$, $I_{90°}$, $I_{180°}$, $I_{270°}$) and
   - comparison of the actual variable ($U_4$; $U_8$) with the reference variable ($U_5$) for producing a control difference for controlling the intensity of the light source (1).

7. Method according to claim 6, the actual variable ($U_4$; $U_8$) being produced by an analogue method.

8. Method according to claim 6 or 7, the actual variable ($U_4$) being produced on the basis of the sum of the photocurrents ($I_{0°}$, $I_{90°}$, $I_{180°}$, $I_{270°}$, $I_8$).

9. Method according to one of the claims 6 to 8, electrical signals which are based on the position-dependent photocurrents ($I_{0°}$, $I_{90°}$, $I_{180°}$, $I_{270°}$) being digitalised for producing the reference variable ($U_5$).

10. Method according to one of the claims 6 to 9, the vector length (S) of electrical signals which are based on the position-dependent photocurrents ($I_{0°}$, $I_{90°}$, $I_{180°}$, $I_{270°}$) being formed for producing the reference variable ($U_5$).

11. Method according to claim 10, the vector length (S) being compared with a prescribed value of a reference vector length (SL) and the reference variable ($U_5$) being changed until the difference ($\Delta$) between the vector length (S) and the reference vector length (SL) is within prescribed limits.

12. Method according to one of the claims 9 to 11, a digital-analogue conversion being undertaken after the digitalisation and after the further processing of the digitalised values for providing the reference variable ($U_5$).

**Revendications**

1. Dispositif de régulation d'une source lumineuse (1) d'un appareil de mesure de position, comprenant

   - une règle de mesure (2) déplaçable par rapport à la source lumineuse (1),
   - plusieurs photodétecteurs (3; 8) permettant de convertir la lumière émise par la source lumineuse (1) en courants photoélectriques ($I_{0°}$, $1_{90°}$, $I_{180°}$, $I_{270°}$, $I_8$), le courant photoélectrique ($I_{0°}$, $I_{90°}$, $I_{180°}$, $I_{270°}$, $I_8$) d'au moins un des photodétecteurs (3; 8) pouvant servir de base pour former une grandeur réelle ($U_4$; $U_8$), et les photodétecteurs (3; 8) étant disposés de manière telle qu'au moins une partie des photodétecteurs (3) puisse convertir la lumière modulée par la règle de mesure (2) en courants photoélectriques ($I_{0°}$, $I_{90°}$, $I_{180°}$, $I_{270°}$) dépendant de la position,
   - un moyen (5) pour générer une grandeur de consigne ($U_5$), et
   - un comparateur (6) permettant d'effectuer une comparaison entre la grandeur réelle ($U_4$; $U_8$) et la grandeur de consigne ($U_5$), aux fins de générer une différence de régulation pour réguler l'intensité de la source lumineuse (1),

**caractérisé en ce que** le moyen (5) permet de générer la grandeur de consigne ($U_5$), sur la base des courants photoélectriques ($I_{0°}$, $I_{90°}$, $I_{180°}$, $I_{270°}$) dépendant de la position.

2. Appareil de mesure de position selon la revendication 1, **caractérisé en ce que** le moyen (5) de génération de la grandeur de consigne ($U_5$) présente un module de calcul (5.3) destiné à former la longueur de vecteur (S) de signaux qui sont basés sur les courants photoélectriques ($I_{0°}$, $I_{90°}$, $I_{180°}$, $I_{270°}$) dépendant de la position.

3. Appareil de mesure de position selon la revendication 1 ou 2, **caractérisé en ce que** le moyen (5) de génération de la grandeur de consigne ($U_5$) présente un convertisseur analogique-numérique (5.2) destiné à numériser des signaux qui sont basés sur les courants photoélectriques ($I_{0°}$, $I_{90°}$, $I_{180°}$, $I_{270°}$) dépendant de la position.

4. Appareil de mesure de position selon la revendication 3, **caractérisé en ce que** le moyen (5) de génération de la grandeur de consigne ($U_5$) présente un convertisseur numérique-analogique (5.8) destiné à préparer une grandeur de consigne ($U_5$) analogique.

5. Appareil de mesure de position selon une des revendications précédentes, **caractérisé en ce que** les photodétecteurs (3; 8) et le moyen (5) de génération de la grandeur de consigne ($U_5$) sont intégrés dans un élément semi-conducteur.

6. Procédé de régulation d'une source lumineuse (1) d'un appareil de mesure de position, comprenant les étapes suivantes :

   - conversion de lumière émise par la source lumineuse (1) en courants photoélectriques ($I_{0°}$, $I_{90°}$, $I_{180°}$, $I_{270°}$, $I_8$), à l'aide de photodétecteurs (3; 8), au moins une partie de la lumière émise étant modulée par une règle de mesure (2) déplaçable par rapport à la source lumineuse (1), de sorte que la lumière modulée permet de générer des courants photoélectriques ($I_{0°}$, $I_{90°}$, $I_{180°}$, $I_{270°}$) dépendant de la position, à l'aide d'au moins un nombre partiel des photodétecteurs (3),
   - génération d'une grandeur réelle ($U_4$; $U_8$), sur la base d'au moins un des courants photoélectriques ($I_{0°}$, $I_{90°}$, $I_{180°}$, $I_{270°}$, $I_8$),
   - génération d'une grandeur de consigne ($U_5$), sur la base des courants photoélectriques ($I_{0°}$, $I_{90°}$, $I_{180°}$, $I_{270°}$) dépendant de la position, et
   - comparaison de la grandeur réelle ($U_4$; $U_8$) avec la grandeur de consigne ($U_5$) aux fins de générer une différence de régulation pour la régulation de l'intensité de la source lumineuse (1).

7. Procédé selon la revendication 6, selon lequel la grandeur réelle ($U_4$; $U_8$) est générée par un procédé analogique.

8. Procédé selon la revendication 6 ou 7, selon lequel la grandeur réelle ($U_4$) est générée sur la base de la somme des courants photoélectriques ($I_{0°}$, $I_{90°}$, $I_{180°}$, $I_{270°}$, $I_8$).

9. Procédé selon une des revendications 6 à 8, selon lequel on numérise des signaux électriques basés sur les courants photoélectriques ($I_{0°}$, $I_{90°}$, $I_{180°}$, $I_{270°}$) dépendant de la position, aux fins de générer la grandeur de consigne ($U_5$).

10. Procédé selon une des revendications 6 à 9, selon lequel on forme la longueur de vecteur (S) de signaux électriques basés sur les courants photoélectriques ($I_{0°}$, $I_{90°}$, $I_{180°}$, $I_{270°}$) dépendant de la position, aux fins de générer la grandeur de consigne ($U_5$).

11. Procédé selon la revendication 10, selon lequel la longueur de vecteur (S) est comparée avec une valeur prédéterminée d'une longueur de vecteur de consigne (SL) et la grandeur de consigne ($U_5$) est modifiée jusqu'à ce que la différence ($\Delta$) entre la longueur de vecteur (S) et la longueur de vecteur de consigne (SL) se situe dans des limites prédéfinies.

12. Procédé selon une des revendications 9 à 11, selon lequel la numérisation et le traitement des valeurs numérisées sont suivis d'une conversion numérique-analogique aux fins de préparer la grandeur de consigne ($U_5$).

# FIG. 1

$$A = U_{0°} - U_{180°}$$
$$B = U_{90°} - U_{270°}$$
$$S = \sqrt{A^2 + B^2}$$

$$\Delta = S - SL$$

$$L_L < \Delta < L_H$$

$$Y' = Y \pm Yi$$

ADC — 5.2
5.3
5.5
5.6
5.7
5.8
5.1
SL — 5.4
off
Y
DAC
5

$I_{0°}$  $I_{90°}$  $I_{180°}$  $I_{270°}$

3  3  3  3

2
4
6
1
7
$U_4$
$U_5$

# FIG. 2

$I_{0°}$  $I_{90°}$  $I_{180°}$  $I_{270°}$

ADC — 5.2

5.1

5.4

$A=U_{0°}-U_{180°}$
$B=U_{90°}-U_{270°}$
$S=\sqrt{A^2+B^2}$ — 5.3

SL

$\Delta=S-SL$ — 5.5

$L_L<\Delta<L_H$ — 5.6

5.7

off

Y | Y'=Y±Yi

$U_8$

6

$U_5$

5

DAC — 5.8

1

2

3

3

3

3

7

8

EP 1 510 790 B1

**EP 1 510 790 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2054135 A